# EUROPEAN PATENT SPECIFICATION

(11) **EP 3 162 210 B1**
(45) Date of publication and mention of the grant of the patent: **13.04.2022**
(21) Application number: 15382531.0
(22) Date of filing: 28.10.2015
(51) Int. Cl.: A01N 63/00, A01C 1/06, A01P 21/00

(54) **TREATMENT TO IMPROVE THE GERMINATION OF SEEDS AND SEEDS TREATED IN THIS WAY**
BEHANDLUNG ZUR VERBESSERUNG DER KEIMUNG VON SAATGUT UND AUF DIESE WEISE BEHANDELTES SAATGUT
TRAITEMENT PERMETTANT D'AMÉLIORER LA GERMINATION DE SEMENCES ET GRAINES TRAITÉES DE CETTE MANIÈRE

(43) Date of publication of application: 03.05.2017
(73) Proprietor: FERTINAGRO BIOTECH, S.L., 44195 Teruel (ES)
(72) Inventor: ATARES REAL, Sergio, 44195 TERUEL (ES); ROMERO LOPEZ, Joaquin, 44195 TERUEL (ES); SALAET MADORRAN, Ignasi, 44195 TERUEL (ES); COLOM TOMAS, M ELENA, 44195 TERUEL (ES); FERRER GINES, M MARIA, 44195 TERUEL (ES); NARANJO OLIVERO, Miguel Angel, 44195 Teruel (ES)
(74) Representative: González López-Menchero, Álvaro Luis

(56) References cited:
- MARÍA C. PILAR ET AL: "Alkaline Phosphatase-Polyresorcinol Complex: Characterization and Application to Seed Coating", JOURNAL OF AGRICULTURAL AND FOOD CHEMISTRY, vol. 57, no. 5, 11 March 2009 (2009-03-11) , pages 1967-1974, XP055240433, US ISSN: 0021-8561, DOI: 10.1021/jf803146m
- BIJENDER SINGH ET AL: "Plant Growth Promotion by an Extracellular HAP-Phytase of a Thermophilic Mold Sporotrichum thermophile", APPLIED BIOCHEMISTRY AND BIOTECHNOLOGY, vol. 160, no. 5, 1 March 2010 (2010-03-01) , pages 1267-1276, XP055241506, United States ISSN: 0273-2289, DOI: 10.1007/s12010-009-8593-0
- PRADNYA D GUJAR ET AL: "Effect of phytase from Aspergillus niger on plant growth and mineral assimilation in wheat ( Triticum aestivum Linn.) and its potential for use as a soil amendment", JOURNAL OF THE SCIENCE OF FOOD AND AGRICULTURE, vol. 93, no. 9, 28 January 2013 (2013-01-28), pages 2242-2247, XP055241510, GB ISSN: 0022-5142, DOI: 10.1002/jsfa.6032
- Chong W. Chang: "Study of phytase and fluoride effects in germinating corn seeds", Cereal. Chem., 1 March 1967 (1967-03-01), pages 129-142, XP055241525, Retrieved from the Internet: URL:http://www.aaccnet.org/publications/cc /backissues/1967/Documents/chem44_129.pdf [retrieved on 2016-01-14]
- MARSHALL A AZEKE ET AL: "The effect of germination on the phytase activity, phytate and total phosphorus contents of some Nigerian-grown grain legumes", JOURNAL OF THE SCIENCE OF FOOD AND AGRICULTURE, vol. 91, no. 1, 21 September 2010 (2010-09-21), pages 75-79, XP055672353, GB ISSN: 0022-5142, DOI: 10.1002/jsfa.4150

## Description

The present invention relates to a treatment to improve the germination of seeds, as well as to the seeds which incorporate said treatment.

More specifically, the invention relates to a treatment to improve the germination of seeds, in particular plants rich in phytic acid such as cereals, legumes, dried fruits, the treatment being based on providing the seeds with a coating which includes an agent with phytase activity. The presence of this enzyme in a coating helps the hydrolyzation of the phytic phosphorous, making it more accessible to the seed and thus improving the germination thereof.

One of the problems with which agriculture is faced at present, in particular extensive agriculture, is the percentage and efficiency in the germination process of the different cultures.

In this respect, phosphorous is a vital component for the development of the plants since it is an essential element in many biological processes, it being indispensable in the germinative processes. Phosphorous is accumulated in the seeds and in the fruit in the form of organic phosphorous, where it is essential for the formation and development of the seed. The phytic acid in the form of phytate is the principal form of storing phosphorous in legumes, cereals, oil seeds, with values of between 1 to 5 % of the weight and which even represent up to 6 % in dry weight of the seed. Below, the formula of phytic acid, of formula C₆H₁₈O₂₄P₆ is shown

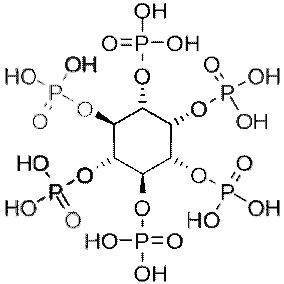

However, this phosphorous accumulated in the form of phytic acid is not assimilated in an efficient manner by the plant, since the action of the endogenous phytases may not be sufficient to release all the phytic phosphorous of the seeds, thus reducing the potential of the germination process.

At present, the phytase enzymes are being studied closely, they are a widely used product in the feeding of monogastric animals (who cannot digest the phytate), since it is an enzyme capable of hydrolyzing the phytate and releasing the organic phosphorous, thus making the phosphorous accessible for the animal.

In the same way, different options for the use of these enzymes in plant nutrition are being investigated since phytate represents an important part of the organic phosphorous which is in the ground and the plants do not have direct access to it. In this respect, the phytases, meso-inositol-hexaphosphate phosphohydrolases, catalyze the splitting of the phosphate groups from the phytic acid or from the phytate, providing as a result a phosphate group of free acid and a lower ester of inositol phosphate.

Due to the fact that the phosphorous is an element essential for the growth of human beings, it is necessary to supplement the development of these with inorganic assimilable phosphorous. Thus the majority of fertilizers used as a ground fertilizer or as a starter supplied (inductors of the germination), incorporate nitrogen and a high quantity of phosphorous in the formulations thereof. This constitutes a contamination factor in the ground since not all the inorganic phosphorous supplied is utilized by the plants, part of it accumulating in the ground, which over the long term can cause significant problems of contamination of the regional water and subsequent eutrophication.

In addition, the organic phosphorous in the ground is in a form which is not assimilable by the plant and cannot be used by the plant in the germination process. As has been mentioned, organic phosphorous in nature is mainly in the form of phosphate groups joined to carbon groups, forming the typical reserve structure known as phytate or phtyic acid. This is the principal form of storing organic phosphorous in legumes, cereals and oil seeds. Thus in order to utilize this phosphorous, the action of endogenous phosphatase enzymes, which facilitate the release of this organic phosphate, is necessary. The phytate is also considered an antinutritional factor due to the ability thereof to sequester divalent ions such as zinc, magnesium, calcium and iron, preventing these from being available to the plant (Reyes-Moreno C, Paredes-López O. 1993. Hard-to-cook phenomenon in common beans (Phaseolus vulgaris) - A review. Critical Reviews in Food Science and Nutrition 33: 224-286).

It has been demonstrated that the content of organic phosphorous in the form of phytic acid in cereals reduces as the endogenous activity of phosphatase enzymes of the plant itself increases (Sandberg 1991; Sripriya et al. 1997; Centeno et al. 2001). In the ungerminated seeds, very little activity of the intracellular phosphatase enzymes has been found, while during the germination process, the phytase activity increases considerably and the levels of phytate decrease (Konietzny et al. 1995; Viveros et al. 2000).

In this context, phosphatase is an enzyme (EC 3.1.3) from the group of stearatases which catalyze the elimination of phosphate groups of certain organic substrates, producing the release of a phosphate ion molecule and the appearance of a hydroxyl group where the phosphate group was esterified.

Among the phosphatases, there are different families of enzymes depending on the substrate, which are capable of hydrolyzing. In this way, protein phosphatases can be found which are phosphatases that act on the phosphorous joining to proteins and principally dedicated to the regulation of cellular processes and phosphatase acids and basic phosphatases which are found in the ground, being segregated by different microorganisms or by the plants themselves. The function of these last phosphatases is the release of the phosphorous joined to the organic material in the ground and thereby making it accessible both for microorganisms and for plants (J.C. Tarafdar et al. 1987). Among this second group of phosphatases, there are special phosphatases called phytases. These enzymes have specificity regarding phytic acid.

Thus, it would be desirable to provide on the surface of the seed an addition of phytase enzyme which is capable of hydrolyzing the phosphorous in the form of phytate which the external layers of the seed contain, increasing the accessibility of the seed to this reserve of phosphorous and favoring the germination speed and the rate, in terms of the germination percentage of the same. In the present description, the concept "germination percentage" relates to the percentage of germinated seeds in a sample relating to a time and determined germination conditions.

In accordance with the foregoing, an object of the invention is to provide a treatment to improve the germination of seeds of plants rich in phytic acid, such as cereals, legumes, dried fruits, the treatment being based on providing the seeds with a coating which includes an agent with phytase activity capable of hydrolyzing the phosphorous in the form of phytate which the external layers of the seed contain. The presence of this enzyme in a coating helps the hydrolyzation of the phytic phosphorous, making it more accessible to the seed and thus improving the germination speed and rate. The treatment of the invention similarly allows the frequency and the quantity of fertilizers applied to be minimized, in turn maximizing the quantity of phosphorous available for the plants.

The coated seeds treated with the treatment according to the invention are also an object of the invention.

Although during the germination, the seed itself synthesizes phytase enzyme capable of releasing part of the phosphorous of the phytic acid for its own development, it is, however, not sufficient so as to utilize the entire content of phytate which the seed contains, the supply of this exogenous phytase provides greater enzymatic activity, with which greater performance is obtained at the time of hydrolyzing the phytic acid and consequently, a greater concentration of assimilable phosphorous.

As has been mentioned previously, the phytic acid is considered an antinutrient due to the capacity thereof to retain divalent ions. Therefore, another advantage of the invention is the benefit that the addition of phytase has on the release of these ions due to the breakdown of the phytic acid, thus providing the seed with essential nutrient for the development thereof.

The invention provides a treatment to improve the germination of seeds, in particular of plants rich in phytic acid, the treatment including providing the seeds with a coating which includes an enzyme with phytase activity which helps to hydrolyze the phytic phosphorous, making it more accessible to the seed and thus improving the germination thereof.

Although the enzyme with phytase activity is not particularly limited, in one embodiment of the invention the phytase used is the one described in the patent application WO 2011/141613 of the present applicant.

The treatment of the invention consists of applying a coating based on an aqueous solution of an enzyme with phytase activity on the surface of the seeds and subsequent drying of the coating in order to obtain a dry seed.

Said aqueous solution includes an organic buffer, preferably an organic buffer adjusted to a pH of between 3 and 9 and in particular a citrate/citric acid buffer adjusted to a pH of between 4.5 and 8.5.

In this respect, the phytases are extremely weak, expressing the maximum activity thereof at a pH which varies between 5.0 and 7.5. Thus coating contains a supply of an organic acid with the aim of buffering the medium and so that it does not lose enzymatic activity.

In one particularly preferred embodiment of the invention, the aqueous solution which contains the enzyme with phytase activity is an aqueous solution of 5 % citric acid adjusted to a pH of 5.5 to 8 with an aqueous solution of potassium hydroxide of 20 %.

In another embodiment of the invention, the quantity of enzyme with phytase activity added to the coating in the form of aqueous buffered solution with a citrate/citric acid buffer at a pH of 5.5 to 8 oscillates between 50 FTU/kg of seed and 2,000,000 FTU/kg of seed, FTU being phytase units, this is the quantity of enzyme necessary for releasing 1 µmol of inorganic phosphorous per minute, 0.0051 mol/l of sodium phytate, at a pH of 5.5 at 37° C.

The form of applying the liquid coating described on the seeds is not particularly limited, powdering, immersion techniques, etc being able to be used therefor. That which has been previously said, is also applicable to the drying of the coating with the aim of obtaining a dry coated seed, techniques of drying in the air at room temperature or at higher temperatures, drying with hot air, etc can be used, provided the properties of the coating, which includes the enzyme with phytase activity, are not altered.

In order to check the effectiveness of the treatment according to the invention, an aqueous buffered solution was prepared as has been previously described, to which different quantities of enzyme with phytase activity were added as is shown in the following examples. Subsequently, barley, wheat and lentil seeds were coated with the prepared solution and germination tests were carried out in culture chambers, in these examples using the phytase described in the patent WO 2011/141613. For all the example, the germination percentage was calculated with respect to the time as well as the median length of the germ. As a control, the corresponding seeds were used without coating. The test conditions were the following:
Working temperature: between 2° C and 40° C
Light periods: 10 to 13 hours of indirect light and 11 to 14 hours of darkness
Working humidity: 2 to 25 %.

The tests were monitored every 12 hours, the germinated seeds and the length of the primary or hypocotyl root being recorded.

### Example 1

Barley seeds were treated as has been previously described by applying the buffered coating with increasing concentrations of enzyme with phytase activity from 0 FTU to 2,000,000 FTU/kg of seed and they were dried. The seeds were subsequently sown in a culture chamber. The germination percentage and median length of the germ was calculated. The results are shown in the following table:

| | Germination percentage | | | | |
|---|---|---|---|---|---|
| FTU/kq of seed | 24 hours | 48 hours | 72 hours | 96 hours | 120 hours |
| control | 0 | 0 | 21 | 68 | 74 |
| 50 | 0 | 0 | 18 | 69 | 69 |
| 500 | 0 | 25 | 46 | 87 | 91 |
| 5,000 | 0 | 83 | 83 | 87 | 96 |
| 50,000 | 0 | 91 | 91 | 93 | 100 |
| 500,000 | 0 | 89 | 100 | 100 | 100 |
| 2,000,000 | 0 | 93 | 95 | 95 | 97 |

| | Median length of the germ (mm) | | | | |
|---|---|---|---|---|---|
| | 24 hours | 48 hours | 72 hours | 96 hours | 120 hours |
| Control | 0 | 0 | 8 | 30 | 48 |
| 50 | 0 | 1 | 10 | 41 | 54 |
| 500 | 0 | 3 | 25 | 66 | 81 |
| 5,000 | 0 | 9 | 41 | 85 | 99 |
| 50,000 | 0 | 13 | 55 | 104 | 126 |
| 500,000 | 0 | 13 | 59 | 150 | 186 |
| 2,000,000 | 0 | 20 | 73 | 189 | 212 |

### Example 2

Wheat seeds were treated as has been previously described by applying the buffered coating with increasing concentrations of enzyme with phytase activity from 0 FTU to 2,000,000 FTU/kg of seed and they were dried. The seeds were subsequently sown in a culture chamber. The germination percentage and median length of the germ was calculated. The results are shown in the following table:

| | Germination percentage | | | | |
|---|---|---|---|---|---|
| FTU/kq of seed | 24 hours | 48 hours | 72 hours | 96 hours | 120 hours |
| control | 0 | 0 | 18 | 56 | 77 |
| 50 | 0 | 0 | 23 | 69 | 82 |
| 500 | 0 | 22 | 41 | 76 | 81 |
| 5,000 | 0 | 91 | 91 | 93 | 97 |
| 50,000 | 0 | 87 | 89 | 92 | 95 |
| 500,000 | 0 | 97 | 97 | 100 | 100 |
| 2,000,000 | 0 | 89 | 98 | 98 | 100 |

| | Median length of the germ (mm) | | | | |
|---|---|---|---|---|---|
| | 24 hours | 48 hours | 72 hours | 96 hours | 120 hours |
| Control | 0 | 1 | 16 | 30 | 48 |
| 50 | 0 | 8 | 29 | 39 | 63 |
| 500 | 0 | 9 | 45 | 73 | 96 |
| 5,000 | 0 | 22 | 61 | 99 | 109 |
| 50,000 | 0 | 24 | 87 | 118 | 185 |
| 500,000 | 0 | 43 | 109 | 177 | 201 |
| 2,000,000 | 0 | 79 | 114 | 189 | 258 |

### Example 3

Lentil seeds were treated as has been previously described by applying the buffered coating with increasing concentrations of enzyme with phytase activity from 0 FTU to 2,000,000 FTU/kg of seed and they were dried. The seeds were subsequently sown in a culture chamber. The germination percentage and median length of the germ was calculated. The results are shown in the following table:

| | Germination percentage | | | | |
|---|---|---|---|---|---|
| FTU/kq of seed | 24 hours | 48 hours | 72 hours | 96 hours | 120 hours |
| control | 0 | 3 | 68 | 81 | 81 |
| 50 | 0 | 2 | 23 | 74 | 87 |
| 500 | 5 | 81 | 93 | 93 | 95 |
| 5,000 | 8 | 84 | 87 | 89 | 89 |
| 50,000 | 7 | 87 | 91 | 91 | 97 |

| | Germination percentage | | | | |
|---|---|---|---|---|---|
| FTU/kq of seed | 24 hours | 48 hours | 72 hours | 96 hours | 120 hours |
| 500,000 | 8 | 92 | 92 | 93 | 93 |
| 2,000,000 | 6 | 97 | 97 | 97 | 97 |

| | Median length of the germ (mm) | | | | |
|---|---|---|---|---|---|
| | 24 hours | 48 hours | 72 hours | 96 hours | 120 hours |
| Control | 0 | 0 | 15 | 19 | 20 |
| 50 | 0 | 0 | 16 | 25 | 27 |
| 500 | 0 | 12 | 19 | 32 | 35 |
| 5,000 | 0 | 16 | 22 | 39 | 41 |
| 50,000 | 0 | 21 | 29 | 44 | 50 |
| 500,000 | 0 | 20 | 34 | 49 | 58 |
| 2,000,000 | 0 | 29 | 41 | 66 | 96 |

As can be observed from the results of the previous examples, the treatment of the invention improves both the germination percentage and the median length of the germ in comparison with the untreated seeds.

## Claims

1. A treatment to improve the germination of seeds, **characterized in that** it consists of applying a coating based on an aqueous solution of an enzyme with phytase activity, the aqueous solution which contains the enzyme with phytase activity based on an organic acid buffer adjusted to a pH of between 3 and 9, on the surface of the seeds and subsequent drying of the coating in order to obtain a dry seed.

2. The treatment to improve the germination of seeds according to claim 1, **characterized in that** the organic acid buffer is a citrate/citric acid buffer adjusted to a pH of between 4.5 and 8.5.

3. The treatment to improve the germination of seeds according to claim 2, **characterized in that** the aqueous solution which contains the enzyme with phytase activity is an aqueous solution of 5 % of citric acid adjusted to a pH of 5.5 to 8 with an aqueous solution of potassium hydroxide of 20 %.

4. The treatment to improve the germination of seeds according to claim 1, **characterized in that** the quantity of enzyme with phytase activity added to the coating in the form of aqueous buffered solution oscillates between 50 FTU/kg of seed and 2,000,000 FTU/kg of seed, FTU being phytase units, this is the quantity of enzyme necessary for releasing 1 µmol of inorganic phosphorous per minute, of 0.0051 mol/l of sodium phytate, at a pH of 5.5 at 37° C.

5. A dry seed **characterized in that** it includes a coating based on aqueous solution of an enzyme with phytase activity obtained by a treatment according to any one of claims 1 to 4.

## Patentansprüche

1. Behandlung zur Verbesserung der Keimung von Samen, **dadurch gekennzeichnet, dass** diese darin besteht, eine Beschichtung auf der Basis einer wässrigen Lösung eines Enzyms mit Phytase-Aktivität auf die Oberfläche der Samen aufzubringen, wobei die wässrige Lösung, die das Enzym mit Phytase-Aktivität enthält, auf der Basis eines organischen Säurepuffers, der auf einen pH-Wert zwischen 3 und 9 eingestellt ist, und anschließend Trocknen der Beschichtung, um einen trocken Samen zu erhalten.

2. Behandlung zur Verbesserung der Keimung von Samen nach Anspruch 1, **dadurch gekennzeichnet, dass** der organische Säurepuffer ein Citrat/Citronensäure-Puffer ist, der auf einen pH-Wert zwischen 4,5 und 8,5 eingestellt ist.

3. Behandlung zur Verbesserung der Keimung von Samen nach Anspruch 2, **dadurch gekennzeichnet, dass** die wässrige Lösung, die das Enzym mit Phytase-Aktivität enthält, eine wässrige Lösung von 5% Citronensäure ist, die mit einer wässrigen Kaliumhydroxidlösung von 20% auf einen pH-Wert von 5,5 bis 8 eingestellt ist.

4. Behandlung zur Verbesserung der Keimung von Samen nach Anspruch 1, **dadurch gekennzeichnet, dass** die der Beschichtung in Form einer wässrigen Pufferlösung zugesetzte Enzymmenge mit Phytase-Aktivität zwischen 50 FTU/kg Saat und 2.000.000 FTU/kg Saat oszilliert, wobei FTU Phytaseeinheiten sind, d. h. die Enzymmenge, die für das Freisetzen von 1 µmol anorganischem Phosphor pro Minute von 0,0051 mol/l Natriumphytat bei einem pH-Wert von 5,5 bei 37°C benötigt wird.

5. Trockener Samen, **dadurch gekennzeichnet, dass** dieser eine Beschichtung auf Basis einer wässrigen Lösung eines Enzyms mit Phytase-Aktivität einschließt, die durch eine Behandlung nach einem der Ansprüche 1 bis 4 erhalten wurde.

## Revendications

1. Traitement permettant d'améliorer la germination de semences, **caractérisé en ce qu'**il consiste à appliquer un revêtement à base d'une solution aqueuse d'une enzyme présentant une activité de phytase, la solution aqueuse qui contient l'enzyme présentant une activité de phytase à base d'un tampon acide organique ajusté à un pH entre 3 et 9, sur la surface des semences et sécher ultérieurement le revêtement pour obtenir une semence sèche.

2. Traitement permettant d'améliorer la germination de semences selon la Revendication 1, **caractérisé en ce que** le tampon acide organique est un tampon de citrate/d'acide citrique ajusté à un pH entre 4,5 et 8,5.

3. Traitement permettant d'améliorer la germination de semences selon la Revendication 2, **caractérisé en ce que** la solution aqueuse qui contient l'enzyme présentant une activité de phytase est une solution aqueuse à 5 % d'acide citrique ajustée à un pH de 5,5 à 8 avec une solution aqueuse d'hydroxyde de potassium à 20 %.

4. Traitement permettant d'améliorer la germination de semences selon la Revendication 1, **caractérisé en ce que** la quantité d'enzyme présentant une activité de phytase ajoutée au revêtement sous forme de solution aqueuse tamponnée oscille entre 50 FTU/kg de semence et 2.000.000 FTU/kg de semence, FTU étant des unités de phytase, c'est la quantité d'enzyme nécessaire pour libérer 1 µmol de phosphore inorganique par minute, de 0,0051 mol/l de phytate de sodium, à un pH de 5,5 à 37 °C.

5. Semence sèche **caractérisée en ce qu'**elle comprend un revêtement à base d'une solution aqueuse d'une enzyme présentant une activité de phytase obtenue par un traitement selon l'une quelconque des Revendications 1 à 4.
